# EUROPEAN PATENT SPECIFICATION

(11) **EP 3 208 767 B1**
(45) Date of publication and mention of the grant of the patent: **02.12.2020**
(21) Application number: 15850207.0
(22) Date of filing: 15.10.2015
(51) Int. Cl.: G06Q 30/06, G06Q 30/00

(54) **APPRAISAL SYSTEM AND APPRAISAL METHOD**
BEURTEILUNGSSYSTEM UND BEURTEILUNGSVERFAHREN
SYSTÈME D'ÉVALUATION ET PROCÉDÉ D'ÉVALUATION

(30) Priority: 16.10.2014 JP 2014211673
(43) Date of publication of application: 23.08.2017
(73) Proprietor: Ecoring Co. Ltd., Himeji-shi, Hyogo 672-8057 (JP)
(72) Inventor: KUWATA, Issei, Himeji-shi Hyogo 672-8057 (JP)
(74) Representative: Mewburn Ellis LLP
(86) International application number: PCT/JP2015/079157
(87) International publication number: WO 2016/060200

(56) References cited:
- WO-A1-2009/044826
- WO-A1-2013/173408
- WO-A1-2013/191281
- JP-A- 2006 119 763
- JP-A- 2012 195 018
- JP-A- 2013 235 578
- US-A1- 2014 304 156

## Description

### TECHNICAL FIELD

The present invention relates to an appraisal system and method to determine whether an article is authentic.

### BACKGROUND ART

In recent years, as science and technology progress, a copying type forgery technique which can copy the model of an authentic product is developed, and it is becoming difficult to determine whether an article to be appraised is authentic simply by visually observing the article.

Difficulty or indefiniteness or uncertainty in determination of authenticity may increase consumers' distrust thereof and decrease their reliance thereon, and when many elaborate counterfeit articles appear on the market, they may significantly impair sound maintenance (purchase and sale) of articles in the market and their asset values.

Accordingly, conventionally, judges use a loupe, a microscope or a similar magnifier to carefully examine articles to be appraised in detail, or determine authenticity based on promises according to empirical rules or the like regarding the articles, and doing so has a tendency to increase a burden on the judges.

In this regard, introducing an appraisal system which enables determination of authenticity of an article is currently considered, and for example, there is proposed an appraisal system which determines whether metallic currency for collection is authentic (Japanese Patent publication JP2007018461 (JP4552068B) (patent document 1)). US 2009/089175 A1 proposes a product evaluation system that evaluates the authenticity of a product. WO 2013/191281 proposes a verification method that uses image characteristics of a component of a product.

### CITATION LIST

### PATENT DOCUMENT

Patent document 1: Japanese Patent publication JP2007018461 (JP4552068B)

### SUMMARY OF INVENTION

### TECHNICAL PROBLEM

However, this system relates to a special article that is metallic currency for collection, and it is not a system which appraises articles in the general market.

The present invention has been made to solve the above problem, and an object of the present invention is to provide an appraisal system and method allowing a simple system to be used to determine whether an article to be appraised is authentic.

### SOLUTION TO PROBLEM

In a first aspect, an appraisal system according to claim 1 is provided. In a second aspect, an appraisal method according to claim 5 is provided.

Preferably, the appraisal system further comprises a state determination unit configured to determine a state of the article to be appraised, based on information of a contour of a genuine product obtained by the article information obtaining unit and a result of picking up an image by the image pickup unit.

### ADVANTAGEOUS EFFECT OF INVENTION

According to one aspect, whether an article to be appraised is authentic can be determined in a simple system.

### BRIEF DESCRIPTION OF DRAWINGS

Fig. 1 illustrates a configuration of an appraisal system 1 based on an embodiment of the present invention.
Fig. 2 is a functional block diagram of a measurement device 10 based on an embodiment.
Fig. 3 is a functional block diagram of an assessment device 100 based on an embodiment.
Fig. 4 illustrates contents displayed on a display 102 based on an embodiment.
Fig. 5 is a figure illustrating a metallic-element database based on an embodiment.
Fig. 6 is a figure illustrating a product database based on an embodiment.
Fig. 7 is a flow chart illustrating an appraisal method of appraisal system 1 based on an embodiment.
Fig. 8 illustrates contents displayed on a display 102# based on a first exemplary variation of an embodiment.
Fig. 9 illustrates contents displayed on a display 103 based on a second exemplary variation of an embodiment.
Fig. 10 illustrates a database registration screen 105 based on the second exemplary variation of the embodiment.
Fig. 11 is a flow chart illustrating a database registration process based on the second exemplary variation of the embodiment.
Fig. 12 illustrates a flow to perform a profit returning process based on an embodiment.

### DESCRIPTION OF EMBODIMENTS

Hereafter, reference will be made to the drawings to describe the present invention in embodiments. In the following description, identical or corresponding components are identically denoted and will not be described repeatedly in detail.

### <General Configuration>

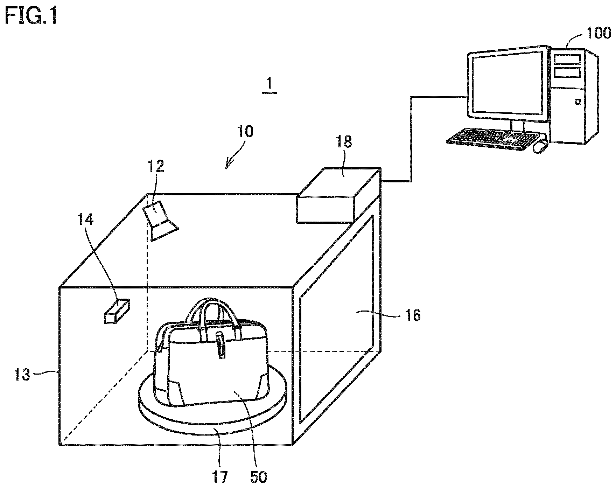

Fig. 1 illustrates a configuration of an appraisal system 1 based on an embodiment of the present invention.

As shown in Fig. 1, appraisal system 1 includes a measurement device 10 and an assessment device 100. Assessment device 100 is a so-called PC (Personal Computer). Note that it is also possible to integrate measurement device 10 and assessment device 100 together to be a single appraisal apparatus.

Measurement device 10 is provided to be capable of communicating with assessment device 100 and is connected via a network. The network may be a local network (LAN) or a Wide Area Network (WAN), and may be in a wireless or wired communication system.

Measurement device 10 has a casing 13, and includes a camera 12, an x ray irradiation device 14, a detection device 16, and a rotatably driven device 17, provided in casing 13. Furthermore, a control device 18 is provided outside casing 13.

In this example, an article (a bag) 50 to be appraised (or measured) is shown in casing 13.

Control device 18 controls each unit. Assessment device 100 instructs control device 18 of measurement device 10 to control each unit to perform a variety of operations.

Camera 12 picks up an image of article 50 to be appraised (or measured) and transmits to assessment device 100 data of the picked up image.

X ray irradiation device 14 radiates an x ray to article 50 to be appraised (or measured).

Detection device 16 transmits as detection data to assessment device 100 a detection result obtained through the radiation by x ray irradiation device 14. In this example, detection device 16 obtains component information of a component of a metallic part (a metal) attached to article 50 obtained as a result of having subjected article 50 to x ray irradiation. Detection device 16 transmits the obtained detection result (i.e., component information) to assessment device 100 as detection data. Note that detection device 16 may also include metal's type number data as a detection result (component information) transmitted to assessment device 100.

Rotatably driven device 17 is rotatably driven in response to an instruction received from control device 18. Rotatably driven device 17 is provided to be able to rotate article 50 to be appraised (or measured) around 360 degrees, and can change article 50 angularly to subject it to x ray irradiation, change the article's orientation relative to camera 12, and the like.

Note that, in this example, rotatably driven device 17 is not an essential configuration, and may be dispensed with. Furthermore while in this example a case will be described in which a single camera 12 is used to pick up an image of article 50, a plurality of cameras may be used to pick up an image of article 50 in a variety of directions. For example, an image of article 50 may be picked up by each of cameras disposed in six directions (i.e., directions frontwardly, rearwardly, rightwardly, leftwardly, upwardly, and downwardly of article 50). This allows highly precise appraisal.

Note that in this example a case has been described in which rotatably driven device 17 is rotatably driven to change an angle at which camera 12 picks up an image of article 50. However, the configuration to change the angle is not limited thereto, and a movement mechanism to move camera 12 may be provided and adjusted to change the angle at which camera 12 picks up an image of article 50. Note that in that case, a configuration which does not provide rotatably driven device 17 may be used. For example, control device 18 may control the movement mechanism in response to an instruction issued from assessment device 100.

Furthermore, in another embodiment, at least a portion of an information processing performed in appraisal system 1 may be distributed by a plurality of devices which can communicate via a network (a wide area network and/or a local network) and thus performed thereby.

### <Configuration of Measurement Device 10>

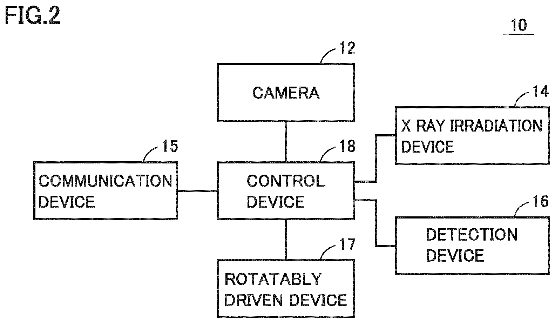

Fig. 2 is a functional block diagram of measurement device 10 based on an embodiment.

As shown in Fig. 2, measurement device 10 includes camera 12, x ray irradiation device 14, communication device 15, detection device 16, rotatably driven device 17, and control device 18.

Each unit is connected to control device 18 and operates in response to an instruction issued from control device 18.

Communication device 15 functions as a communication interface for communicating with assessment device 100. Measurement device 10 communicates data with assessment device 100 via communication device 15. In this regard, communication device 15 transmits a picked up image's data from camera 12 and detection data from detection device 16 to assessment device 100. Furthermore, communication device 15 receives an instruction from assessment device 100, and outputs the received instruction to control device 18.

### <Configuration of Assessment Device 100>

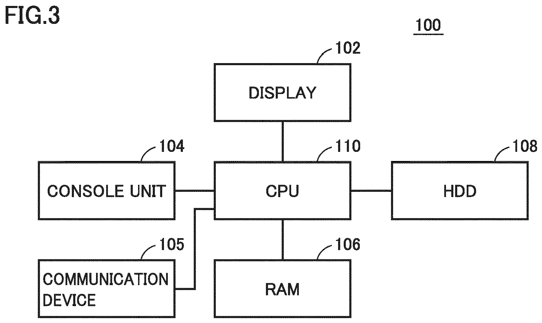

Fig. 3 is a functional block diagram of assessment device 100 based on an embodiment.

As shown in Fig. 3, assessment device 100 includes a display 102, a console unit 104, a communication device 105, a RAM (Random Access Memory) 106, a HDD (Hard disk drive) 108, and a CPU (Central Processing Unit) 110.

CPU 110 controls each unit.

Communication device 105 functions as a communication interface for communicating with measurement device 10. Assessment device 100 communicates data with measurement device 10 via communication device 105. In this regard, communication device 105 transmits data to measurement device 10 regarding an instruction received via console unit 104 for operation.

Console unit 104 is an input interface such as a keyboard, a mouse, and the like. In this example, as one example, console unit 104 of assessment device 100 can be operated to indicate operation of measurement device 10 via communication device 105.

RAM 106 is provided as a working area of assessment device 100.

HDD 108 includes a variety of programs, a database, etc. for performing a determination process in assessment device 100.

CPU 110 determines article 50 to be appraised (or measured), based on a variety of databases stored in HDD 108 and the picked up image's data and detection data transmitted from measurement device 10. And CPU 110 displays a determination result on display 102.

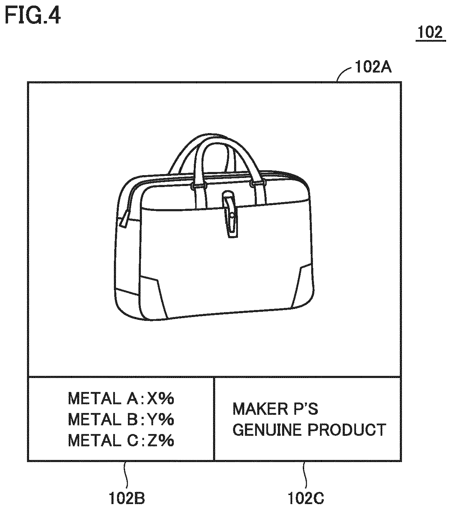

Fig. 4 illustrates contents displayed on display 102 based on an embodiment.

Fig. 4 shows display 102 having a display area 102A showing an image of article 50 (a bag) picked up by camera 12. Furthermore, display 102 displays in a display area 102B "metal A: X%," "metal B: Y%," and "metal C: Z%" as a determination result of assessment device 100. Furthermore, display 102 displays in a display area 102C a case in which the manufacturer of article 50 is a maker (a manufacturer) P. Furthermore, a case is shown in which article 50 is determined to be a genuine product.

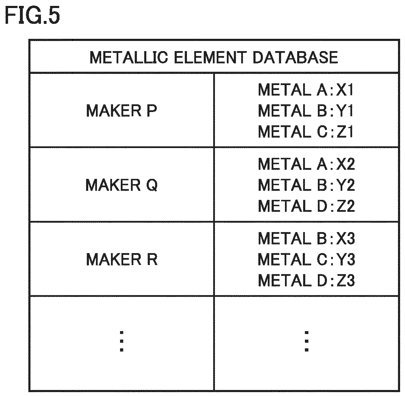

Fig. 5 is a figure illustrating a metallic-element database based on an embodiment.

The metallic-element database is stored in HDD 108 of assessment device 100.

Fig. 5 shows a table of components of metals used by makers.

Specifically, for a maker P, "metal A: X1%", "metal B: Y1%" and "metal C: Z1%" are registered, for a maker Q, "metal A: X2%", "metal B: Y2%" and "metal D: Z2%" are registered, and for a maker R, "metal B: X3%", "metal C: Y3%" and "metal D: Z3%" are registered. Note that a metal component value is not limited to a fixed value and may indicate a range. Furthermore, metal type number data based on the Japanese Industrial Standards etc. may be associated with each maker and thus registered.

Generally, makers use metallic parts composed in mutually different metal component combinations, respectively. Thus, whether an article is authentic can be determined by analyzing component information of a metallic portion (a metallic part) attached to the article.

The table of components of metal that each maker uses can be created based on component information of a metallic part (a metal) previously obtained as a result of subjecting an authentic product to x ray irradiation. Note that an authentic product of an article may not actually be subjected to irradiation and it is also possible to externally obtain and register component information of the metallic part (or metal) of interest.

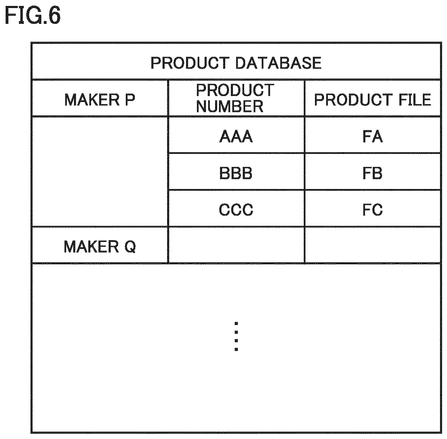

Fig. 6 is a figure illustrating a product database based on an embodiment.

The product database is stored in HDD 108 of assessment device 100.

In Fig. 6, a product number and a product file are associated with maker P and thus registered.

As one example, a case is shown in which product numbers "AAA," "BBB" and "CCC" are associated with maker P, and product files "FA," "FB" and "FC" corresponding to the product numbers are associated and thus registered.

Another maker Q is also similarly discussed.

For a product number, a unique number is assigned for each product by each maker.

A product file is a variety of types of information regarding a product. A product file may include a product's image data, and may be any data indicating the product's feature(s) such as when the product is shipped.

The product database can be created based on information previously obtained from each maker. Note that it is also possible to automatically construct it based on information publicly released by each maker.

The above metallic-element database and product database are article information regarding a genuine product of an article.

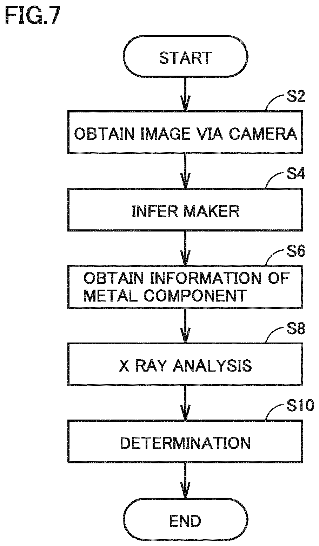

Fig. 7 is a flow chart illustrating an appraisal method of appraisal system 1 based on an embodiment.

As shown in Fig. 7, appraisal system 1 obtains an image of an article via a camera (step S2). Specifically, assessment device 100 instructs camera 12 of measurement device 10 to pick up an image of article 50. Camera 12 of measurement device 10 follows the instruction to pick up an image of article 50. Measurement device 10 transmits the picked up image's data to assessment device 100. Note that measurement device 10 may transmit a plurality of picked up images' data to assessment device 100. Specifically, rotatably driven device 17 of measurement device 10 can be driven to adjust an angle at which an image of article 50 is picked up to thus transmit a plurality of picked up images' data to assessment device 100.

Then, appraisal system 1 infers a maker (step S4). Assessment device 100 infers a maker based on the obtained picked up image's data. Specifically, feature information such as a logo, a mark, a tag etc. of a maker of article 50 included in the picked up image's data is extracted, and a maker is inferred therefrom.

Feature information such as a logo, a mark, a tag etc. of a maker is included in a product file of the product database. When it is determined that the above feature information matches a product file corresponding to a product, a maker is accordingly inferred.

Alternatively, a maker can also be inferred by comparing a feature of a contour included in a picked up image's data with a feature of a contour of image data of a product included in a product file of the product database. For example, how much two products' contour features match can be calculated, and when they match at a high degree, it can be determined that the product of interest is a product corresponding to the product file and a maker can be inferred.

Then, appraisal system 1 obtains metal component information (step S6). Specifically, assessment device 100 obtains, based on the metallic-element database, component information of a metal which the inferred maker uses.

Then, appraisal system 1 performs an x ray analysis (step S8). Specifically, assessment device 100 instructs measurement device 10 to drive x ray irradiation device 14 to subject article 50 to x ray irradiation. Detection device 16 obtains component information of a metallic part (a metal) obtained as a result of the x ray irradiation and outputs the information to assessment device 100.

Then, appraisal system 1 performs a determination process (step S10). Specifically, assessment device 100 performs the determination process based on a detection result (the component information of the metallic part) from detection device 16 and component information of a metal obtained from the metallic-element database. When assessment device 100 determines that the detection result from detection device 16 and the component information of the metal obtained from the metallic-element database match, assessment device 100 determines that article 50 is the inferred maker's authentic product (genuine product).

When assessment device 100 determines that the detection result from detection device 16 and the component information of the metal obtained from the metallic-element database do not match, assessment device 100 determines that article 50 is a counterfeit product of the inferred maker.

And appraisal system 1 ends the process (END).

By this system, appraisal system 1 infers article 50's maker based on data of a picked up image of article 50, and, from a metallic-element database, obtains component information of a metallic part according to the inferred maker. And appraisal system 1 can determine whether article 50 is authentic based on comparing the obtained component information and a detection result of an x ray analysis. Thus appraisal system 1 can easily determine whether article 50 to be appraised is authentic.

Note that matching of component information of metal is not limited to a complete match and also includes a substantial match such as being included in a prescribed range.

Note that appraisal system 1 in this example has been described for a case where information in a product database stored in HDD 108 included in assessment device 100 is utilized to infer an article's maker. However, appraisal system 1 is not limited to this configuration, and it can also infer an article's maker by cooperating with another external server connected by a network via communication device 105. Appraisal system 1 in another aspect may be such that a product database is stored in the external server and a maker is inferred based on an analysis result received from the external server.

Note that, in appraisal system 1 of this example, a system using an x ray irradiation device to analyze component information of a metal part of an article has been described. However, appraisal system 1 in other examples is not particularly limited to x ray, and it can also obtain the component information in another system. For example, laser induced breakdown spectroscopy may be employed to subject an article's metal part to laser light to obtain component information through a spectral analysis, or alternatively a spectral analysis which utilizes plasma, a microwave etc. can also be utilized.

Furthermore, in appraisal system 1 of this example, a case in which camera 12 is used to pick up an image of an article has mainly been described. However, appraisal system 1 in another aspect can also pick up an image of an article by x ray irradiation device 14, and it can also be configured without camera 12. This configuration is simpler and allows a reduced number of parts.

Furthermore, in the above determination process of appraisal system 1 in another aspect, not only the determination of whether metallic component information match, but a picked up image's data can also be used to further combine whether a feature of a product included in a product file is satisfied to thus make a determination. This allows highly precise determination of authenticity.

### (First Exemplary Variation)

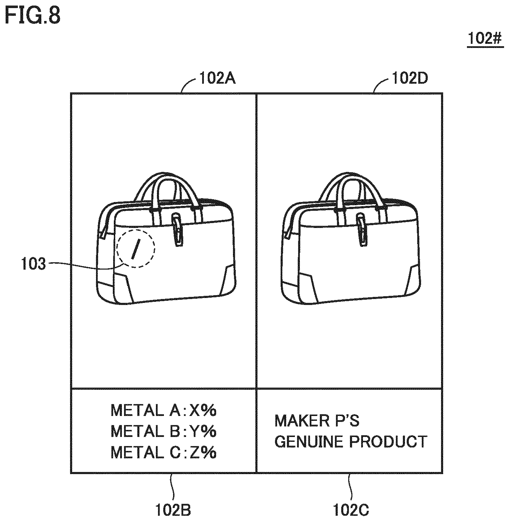

Fig. 8 illustrates contents displayed on display 102# based on a first exemplary variation of an embodiment.

As shown in Fig. 8, display 102# is divided into display areas 102A-102D.

Display area 102A displays an image of article 50 (a bag) picked up by camera 12. Furthermore, display area 102B displays "metal A: X%," "metal B: Y%," and "metal C: Z%" as a determination result of assessment device 100. Furthermore, display area 102C indicates a case in which the manufacturer of article 50 is a maker (a manufacturer) P. Furthermore, display area 102D displays image data of a product (a genuine product) included in a product file.

A judge (a user) can easily appraise article 50 by comparing the image data displayed in display area 102A with the image data displayed in display area 102D.

Furthermore, display 102# shows a marker 103 at a location of a flaw in the image data shown in display area 102A.

Specifically, assessment device 100 compares data of an image of article 50 picked up by camera 12 with image data of a product included in a product file and extracts a difference. By the extraction of the difference, assessment device 100 can extract the flaw's location. And assessment device 100 displays a marker (in this example, a circle of a dotted line) on the extracted location. By this displaying, assessment device 100 can provide a judge with information indicative of a state in quality.

Furthermore, assessment device 100 may extract and display not only a flaw's location but also a part's missing portion, smeared portion etc. Furthermore, assessment device 100 can also compare a color of a product (a genuine product) included in a product file with a color of article 50 to determine a degree of discoloring to provide information indicating a state in quality.

While in this example an example has been described in which article 50 is mainly a bag, appraisal system 1 is not limited to a bag in what it is applied to, and it is similarly applicable to another article having metal attached thereto. For example, appraisal system 1 is applicable to an object including an article such as noble metals such as a necklace.

### (Second Exemplary Variation)

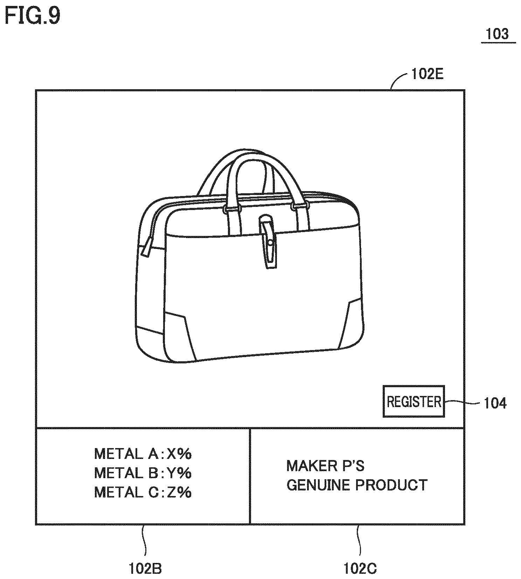

Fig. 9 illustrates contents displayed on a display 103 based on a second exemplary variation of an embodiment.

As shown in Fig. 9, display 103 is different from display 102 described in Fig. 4 in that display area 102A is changed to a display area 102E. Specifically, display area 102E is a configuration in which a "registration" icon 104 is further provided in display area 102A.

In the second exemplary variation of the embodiment, a system will be described which registers to a database a result of having determined article 50 to be appraised (or measured).

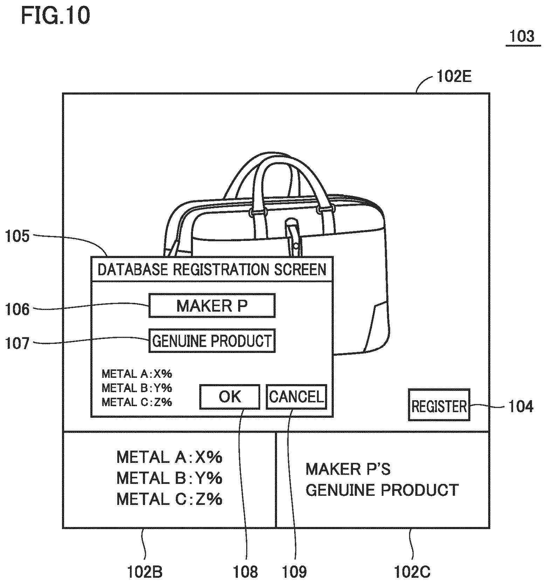

Fig. 10 illustrates a database registration screen 105 based on the second exemplary variation of the embodiment.

As shown in Fig. 10, database register screen 105 includes an input area 106 allowing a maker's name to be registered by operating console unit 104, an input area 107 allowing whether an article is a genuine product or a counterfeit to be registered by operating console unit 104, an "O.K." icon 108, and a "Cancel" icon 109.

In this example, a case is indicated in which a "maker P" is displayed in input area 106, based on a determination result, and a "genuine product" is displayed in input area 107. Furthermore, as a determination result of assessment device 100, "metal A: X%," "metal B: Y%," and "metal C: Z%" are displayed.

And for example, a judge can change the contents of input areas 106 and 107 by operating a keyboard etc. of console unit 104.

Specifically, when the judge cannot determine a maker based on a determination result or determine whether an article is a genuine product or a counterfeit, etc., the judge can operate a keyboard etc. of console unit 104 to determine it.

And the judge can operate console unit 104 to select "O.K." icon 108 to register a determination result to a database. Specifically, as one example, the judge can register it to the metallic-element database.

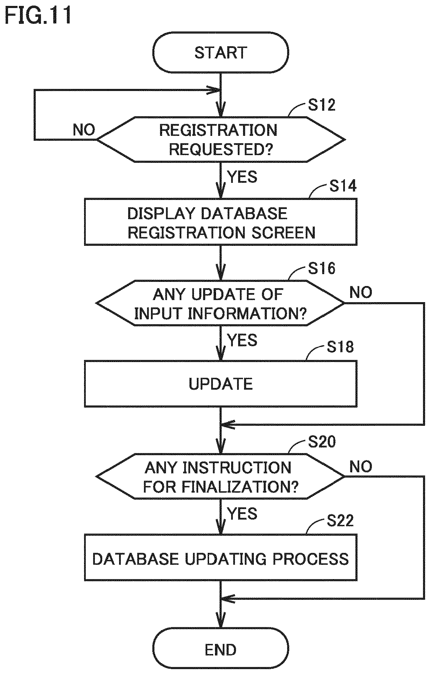

Fig. 11 is a flow chart illustrating a database registration process based on the second exemplary variation of the embodiment.

As shown in Fig. 11, assessment device 100 determines whether there is a request for registration (step S12). Specifically, assessment device 100 determines whether "registration" icon 104 shown in Fig. 9 is selected.

Then, in step S12, when assessment device 100 determines that there is a request for registration (YES in step S12), assessment device 100 displays a database registration screen (step S14). Specifically, assessment device 100 displays database registration screen 105 described in Fig. 10.

Then, assessment device 100 determines whether there is an update of input information (step S16).

Specifically, assessment device 100 determines whether contents of input areas 106 and 107 of database registration screen 105 have been updated via console unit 104.

In step S16, when assessment device 100 determines that there is an update of input information (YES in step S16), assessment device 100 updates the information (step S18). And assessment device 100 proceeds to step S20.

In step S16, when assessment device 100 determines that there is no update of input information (NO in step S16), assessment device 100 skips step S18 and proceeds to step S20.

In step S20, assessment device 100 determines whether there is an indication for finalization (step S20). Specifically, assessment device 100 determines whether "O.K." icon 108 shown in Fig. 10 is selected.

In step S20, when assessment device 100 determines that there is an indication for finalization (YES in step S20), assessment device 100 performs a process for updating the database (step S22).

And assessment device 100 ends the process (END).

In step S20, when assessment device 100 determines that there is no indication for finalization (NO in step S20), assessment device 100 ends the process (END). Specifically, assessment device 100 ends the process when "cancel" icon 109 shown in Fig. 10 is selected.

By the above database registration process, the metallic-element database's contents are updated.

Specifically, for example, a determination result (a value of a component of metal) determined as maker P's genuine product can be added to create a database with variation considered as a criterion for assessment. This allows appraisal system 1 to provide highly precise appraisal.

Furthermore, assessment device 100 may perform the process to create a metallic-element database stored in HDD 108 corresponding to each maker.

Furthermore, assessment device 100 not only registers a genuine product to the metallic-element database but may also register a counterfeit, based on a determination result, to the metallic-element database.

By also registering a counterfeit in the metallic-element database, when a similar article of a genuine product which is a counterfeit is distributed in a large quantity, highly precise appraisal of the counterfeit can be done based on a value of a component of a metal corresponding to the counterfeit.

### (Others)

A case is considered in which after an article appraised in accordance with the above appraisal system is evaluated and purchased, its profit may be increased. For example, there is a case in which after an article is purchased from a client its market price may soar and its profit ratio may become high. In that case, a system will be described in which a profit is returned to the client who provided that article. A profit ratio refers to a ratio of an amount of money paid for a purchase to a profit. A profit is equivalent to a difference between a market price at which an article was sold and an amount of money paid to purchase the article from a client.

The profit returning process can be implemented by appraisal system 1 as an example.

Information of a market price at which an article was sold, an amount of money paid to purchase the article from a client, the client and the like is assumed to be registered to a storage unit of appraisal system 1.

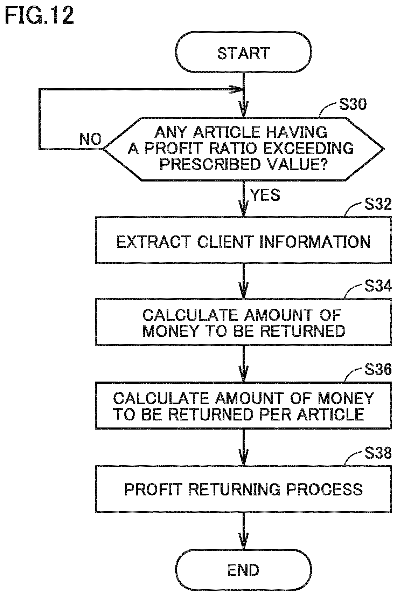

Fig. 12 illustrates a flow to perform a profit returning process based on an embodiment.

As shown in Fig. 12, appraisal system 1 initially determines whether there is any article having a profit ratio exceeding a prescribed value (step S30). Specifically, appraisal system 1 determines whether there is any article having a profit ratio exceeding a prescribed value (e.g., of 50%). The prescribed value can be set to any value.

In step S30, when there is no article having a profit ratio exceeding the prescribed value (NO in step S30), appraisal system 1 maintains the state of step S30. Note that the flow can be performed for each prescribed period of time as an example. For example, it is possible to perform it every month or every year.

In step S30, when appraisal system 1 determines that there is an article having a profit ratio exceeding the prescribed value (YES in step S30), appraisal system 1 extracts client information (step S32). Specifically, appraisal system 1 extracts information (client information) regarding a client who provided that article. When a plurality of clients have provided such articles, appraisal system 1 extracts all the clients' information.

Information such as a client's name, residential address and contact address, an amount of money paid for a purchase from the client, and a date and time of the purchase is previously held as a database and the client information is extracted from this database. The client information stored in the database is registered for example when a bargain with a client who provided an article is established. Note that the information of the database may be had by the appraisal system or may be obtained from a server connected by a network.

Then, appraisal system 1 calculates an amount of money to be returned (step S34). Specifically, appraisal system 1 calculates an amount of money of a prescribed ratio from a total profit obtained from the article(s) of interest, as an amount of money to be returned, as one example. Note that the amount of money to be returned is calculated in a variety of methods and the above described method is not exclusive.

Then, appraisal system 1 calculates an amount of money to be returned per article (step S36). Specifically, appraisal system 1 calculates, based on the amount of money to be returned and the number of articles provided, an amount of money to be returned per article. By dividing the amount of money to be returned by the number of articles, the amount of money to be returned per article can be calculated.

And appraisal system 1 performs the profit returning process (step S38). Specifically, appraisal system 1 returns to a client who provided that article the amount of money to be returned per article. Appraisal system 1 performs the returning process based on client information. When a transfer destination to which a remittance is made is registered in the client information, appraisal system 1 can also perform the process by automatic remittance.

By this system, appraisal system 1 returns a profit of a purchased article to a client when the profit is large. By this processing, the client's satisfaction can be increased.

### (Controlling X Ray Irradiation Area)

An article for example such as a leather bag may be composed of a metal part and a portion other than metal (a portion of leather). In that case, when x ray irradiation device 14 subjects both the metal part and the portion other than metal to x ray irradiation, detection device 16 may detect light reflected as the portion other than metal, or the portion of leather, is subjected to x ray irradiation. Accordingly, by maximally avoiding x ray irradiation of the portion other than metal and thus subjecting the metal part to x ray irradiation, reliability of determination of authenticity based on a metal component of an article can further be enhanced. Herein, an irradiation area when x ray irradiation device 14 subjects an article to x ray irradiation is determined by an aperture of radiation of x ray (the larger the aperture of radiation of x ray is, the larger the irradiation area is), a distance from x ray irradiation device 14 to the article (an x ray irradiation distance), and the like. Accordingly, x ray irradiation device 14 may have the x ray radiation aperture switchably to maximally avoid x ray irradiation of the portion of the article other than metal (i.e., to subject the metal part to x ray irradiation over an area or larger)

### (Using Image Picked Up via Camera, and Accordingly Moving X ray Irradiation Position to Control Irradiation Area)

Furthermore, in order to perform further more efficient x ray irradiation of a metal part of an object to be appraised, a drive unit is provided to allow x ray irradiation device 14 to be movable within measurement device 10. By the drive unit moving x ray irradiation device 14 along an x ray irradiation axis along which an x ray irradiation distance from x ray irradiation device 14 to the object to be appraised is varied the appraisal apparatus can control an x ray irradiation area of the object to be appraised. Furthermore, by the drive unit moving x ray irradiation device 14 in a perpendicular plane to which the x ray irradiation axis from x ray irradiation device 14 to the object to be appraised is normal, the x ray irradiation position on the object to be appraised can be moved. For example, the x ray irradiation position can be moved to avoid x ray irradiation of a portion other than a metal part. For example an external communication instrument (a smart phone, a tablet, a PC having a monitor, and other instruments) which displays an image picked up by camera 12 can receive an operation input from a judge to move x ray irradiation device 14 by the drive unit. The external communication instrument transmits a signal to the appraisal apparatus for the drive unit to move x ray irradiation device 14. Thus, x ray irradiation of a metal part of an object to be appraised can be performed further more efficiently. For example, when a fluorescent x ray analysis device is installed in a shop or the like, an image picked up by camera 12 is transmitted to a remote, external communication instrument external to the shop. An operator who operates the external communication instrument can perform an input operation to move a position at which an object to be appraised is subjected to x ray irradiation by x ray irradiation device 14, and to perform x ray irradiation. Thus, for example, an operation for determination of authenticity can be performed remotely from outside a shop to assist an appraisal operation done by a judge in the shop, and irrespective of the judge's learned skill for appraisal, it becomes still easier to ensure the quality of an operation of determination of authenticity at a level or higher. Furthermore, for example, if there is no judge in a shop, and a client visits the shop with an object to be appraised, a judge outside the shop can use the appraisal apparatus remotely from outside the shop to subject the object to x ray irradiation to determine authenticity.

Furthermore, a portion for which a component analysis is required to appraise an object to be appraised (i.e., a portion that should be appraised) is determined for each article. For example, in an operation of appraisal of articles such as handbags, watches and the like, it is effective to conduct a component analysis of a metallic portion. As such, by the appraisal apparatus subjecting an image picked up by camera 12 to image recognition processing, when a position to be irradiated with x ray to subject an object to be appraised to a component analysis can be determined, the appraisal apparatus can also determine whether the determined position is included in an irradiation area in which x ray irradiation device 14 irradiates the object to be appraised with x ray (that is, the appraisal apparatus can also determine whether a portion which should not be irradiated is subjected to x ray irradiation). In that case, the appraisal apparatus supports a judge's appraisal operation by positionally driving x ray irradiation device 14 by the drive unit so that the object to be appraised is subjected to x ray irradiation at a portion to be irradiated. Furthermore, the appraisal apparatus positionally drives x ray irradiation device 14 by the drive unit to subject an object to be appraised to x ray irradiation at a position to be irradiated, so that if there is no judge in a shop, a visitor of the shop can himself/herself perform a series of operations involved in appraisal.

### (Using Image Picked Up via Camera to Present Appraisal Operation Procedure to Judge)

By subjecting an image picked up by camera 12 to image recognition processing, information for assisting a judge's appraisal operation can also be presented to the judge on display 102. A portion for which a component analysis is required to appraise an object to be appraised (i.e., a portion to be appraised) is determined for each article. For example, in an operation of appraisal of articles such as handbags, watches and the like, it is effective to conduct a component analysis of a metallic portion. For example, when the type of an article can be determined by assessment device 100 subjecting an image picked up by camera 12 to image recognition processing (that is, when by image recognition, which category the article is of among a handbag, a watch, etc. is obtained as a recognition result), a guidance which indicates at which portion the article should be subjected to x ray irradiation for component analysis can be displayed on display 102 to assist the judge's appraisal operation procedure. Thus irrespective of the judge's learned skill for appraisal, it becomes still easier to ensure the quality of an operation of determination of authenticity at a level or higher.

### (Chronological Database of Article)

The product database, the metallic-element database and the like can also hold chronological data. For example, for each chronological period for which an article was produced, a value of a component of metal or the like may vary. Furthermore, for each chronological period for which an article was produced, the article's model number may vary. Furthermore, there is a case in which a serial number, a character, a graphic, a symbol, etc. are provided based on an order in which an article was produced. For example there is a model number used only for a specific high-class watch which requires a relatively large time and effort for its production. The article's appraisal result such as a chronological period for which the article was produced, the article's model number, the article's serial number, and the like may vary depending on the chronological period, and by including in a database data indicating the chronological period for which the article was produced, appraisal with the chronological period considered can be facilitated.

### (Appraisal by Handheld Type Fluorescent X ray Analysis Device)

In the description of the above embodiment, appraisal system 1 has been described as including measurement device 10 including x ray irradiation device 14, and assessment device 100 (PC). On the other hand, it is also possible to provide x ray irradiation device 14 separately from the measurement device. As a specific example of this appraisal system 1, a portable handheld type fluorescent x ray analysis device (Handheld XRF (X ray Fluorescence Spectrometer)) can also be used (for example, although a handheld type fluorescent x ray analysis device is provided by Thermo Fisher Scientific, this is not exclusive). For example, by holding a metallic-element database (including a type number data of metal such as stainless steel (JIS (Japanese Industrial Standards)) in a memory of the handheld type fluorescent x ray analysis device, a detection device which detects metal's type number data (detection data) can be implemented.

A judge uses the handheld type fluorescent x ray analysis device to subject an article to x ray irradiation. Thus, the fluorescent x ray analysis device transmits detection data to assessment device 100.

Furthermore, measurement device 10 transmits to assessment device 100 data of an image picked up by and received from camera 12. Assessment device 100 infers a maker based on the data of the image picked up by and received from camera 12. Furthermore, assessment device 100 obtains, from the handheld type fluorescent x ray analysis device, based on the metallic-element database, component information of a metal (in this example, type number data of the metal) which the inferred maker uses.

Assessment device 100 compares the type number data of the metal from the fluorescent x ray analysis device with type number data of a metal of the maker inferred based on the data of the image picked up by and received from camera 12, and assessment device 100 determines whether the data match.

When assessment device 100 determines that the data match, assessment device 100 determines that article 50 is the inferred maker's authentic product (or genuine product). When assessment device 100 determines that the data do not match, assessment device 100 determines that article 50 is a counterfeit product of the inferred maker. As has been described in Fig. 4, the determination result may be displayed on display 102 of assessment device 100.

By enabling appraisal using the portable handheld type device, a judge's appraisal operation can be assisted. For example, when a judge provides an article appraisal service, an article purchase service based on an appraisal result, etc. at a place such as a shop, a device necessary for provision of these services can be made portable, so that when compared with a case where a stationary device is used, a constraint in designing a layout of a place for providing the services is reduced.

### (Determination through Multiple Steps by Determination of Authenticity by Type Number Data and Determination of Authenticity by Component Analysis)

While in the above, determination of authenticity by obtaining metal's type number data has been described, if determination of authenticity by metal's type number data is difficult, a determination process can further be performed based on data of a value of a component of a metal of a product obtained via x ray irradiation of an object to be appraised, and a value of a component of a metal of each maker included in the metallic-element database (see steps S8, S10 indicated in Fig. 7). In other words, while a processing load is reduced by enabling a determination by a relatively coarse determination method only by type number data, determination is also enabled by a detailed determination method based on component data of a metal of a product to maintain precision of appraisal at a high level.

### (Component Analysis System)

A metal component used in a maker's authentic product (or genuine product) and a metal component used in a counterfeit product of the maker may be analyzed by a judge for example via a handheld type fluorescent x ray analysis device, and such analysis results may be accumulated in assessment device 100, a server or the like connected via a network. As a result, a database of metal component data of the genuine product is constructed. In the appraisal system, a server is configured to associate a result of an analysis of a component in a metal part configuring an article with whether the article is a genuine product or a counterfeit product, and thus store them as a database as a history. Assessment device 100 or the server determines whether an article to be appraised is authentic, based on a result of an analysis of a component in a metal part of the article and a history that is stored in the database of a result of an analysis of a component in a metal part of a genuine product or a counterfeit product.

Accordingly, for example when a consumer brings an article to a shop in which appraisal system 1 operates, the article can be analyzed with the handheld type fluorescent x ray analysis device so that an authenticity appraisal service with reference to the database can be provided to the consumer without a judge making a judgment on the spot.

### (Using Image Picked Up by Camera in Handheld Type Fluorescent X Ray Analysis Device)

While in the above a case where a handheld type fluorescent x ray analysis device provided separately from camera 12 of measurement device 10 is utilized has been described, it is also possible that the handheld type fluorescent x ray analysis device is further equipped with camera 12. Camera 12 picks up an image of an article. Together with data of the picked up image, the fluorescent x ray analysis device transmits to assessment device 100 detection data based on x ray irradiation. By this system, by enabling appraisal using a portable device rather than a stationary measurement device, a judge's appraisal operation can further be assisted.

Note that the handheld type fluorescent x ray analysis device may also include other than camera 12 all of the functions of assessment device 100 to implement a single appraisal apparatus.

### (Assisting Appraisal Operation by External Communication Instrument)

Furthermore, while appraisal system 1 in this example has been described for a configuration which displays an analysis result on display 102 of stationary assessment device 100, assessment device 100 is not limited to a stationary type and it can also be a portable form.

Specifically, measurement device 10 may transmit to an external portable instrument such as a tablet, a smart phone etc. that serves as assessment device 100 a detection result detected by detection device 16 as an object to be appraised is subjected by x ray irradiation device 14 to x ray irradiation, and image data. By performing the process of the flowchart of Fig. 7 in the portable instrument, an appraisal operation by a judge is assisted. By this configuration, the judge can confirm at any place an appraisal result serving as an analysis result.

### (Remote Appraisal System)

While appraisal system 1 is assumed to transmit to assessment device 100 data of an image picked up by camera 12 (step S2), other than this, for example an image of an article to be appraised that is picked up in a shop may be transmitted to assessment device 100 (PC) connected via a network to allow a judge who is outside the shop to remotely appraise the article. Herein, as a means to pick up an image of an article to be appraised, a magnification-variable microscope capable of picking up an image of an object according to magnification may be used. The judge who is outside the shop visually appraises, by an image display means such as a monitor, data obtained by picking up an image of an article.

The appraisal system includes a first communication device (PC), and a second communication device (PC) configured to be capable of communicating with the first communication device via a network. The first communication device is configured to transmit to the second communication device a picked up image's data generated by an image pickup unit (such as a camera, a microscope, etc.) configured to pick up an image of an article to be appraised. The second communication device receives the picked up image's data from the first communication device. The second communication device displays the received picked up image's data on a display. The second communication device receives an input operation of an appraisal result of the article, and causes a storage unit to store information which indicates the appraisal result for which the input operation is received for the article. The second communication device is configured to transmit to the first communication device via a network the information which indicates the appraisal result for which the input operation is received. The first communication device is configured to indicate, by displaying on a display etc., the information that indicates the appraisal result received from the second communication device.

Furthermore, by performing the process of the flowchart of Fig. 7 in the second communication device, an appraisal operation by a judge may be assisted.

### (Technique to Enhance Precision of Appraisal)

In the above appraisal system 1, to further enhance precision of appraisal, a thermal conductivity meter which detects the thermal conductivity of an object to be appraised can also be used. For example, precision of appraisal can be enhanced by a judge detecting thermal conductivity in appraising noble metals etc. Furthermore, precision of appraisal can also be enhanced by a judge using a hydrometer to measure the weight of an object to be appraised in the atmosphere and that in water to thus detect the specific gravity of the object to be appraised. For example, precision of appraisal can be further enhanced by using a hydrometer in appraising noble metal in which gold's purity is "18 carat gold." Furthermore, a technique used for determination of authenticity (such as determination of authenticity based on thermal conductivity) may be designated by a judge.

### (Service of Issuing Certificate of Authenticity)

In appraisal system 1, a result of determination of authenticity of an object to be appraised may be issued as a certificate of authenticity such as by printing and thus outputting it on a sheet of paper. For example appraisal system 1 may output in a certificate of authenticity which technique is used to perform determination of authenticity.

### (Presenting Amount of Money to Be Paid to Purchase Article as an Appraisal Result)

Furthermore, in appraisal system 1, assessment device 100 may display an amount of money to be paid to purchase an object to be appraised, based on a result of determination of authenticity of the object to be appraised, as a result of appraisal, on a display. Assessment device 100 holds exchange rate data and data of an amount of money to be paid for purchase at a rate applied to purchase an article (data indicating the article's popularity) as a database. Assessment device 100 obtains information which indicates a state of an article which is an object to be appraised, for example via a judge's input operation or a result of recognizing an image of the article, etc. Assessment device 100 calculates an amount of money to be paid for a purchase, based on the information which indicates the state of the article which is the object to be appraised, exchange rate information, and information of an amount of money to be paid for the purchase at a rate applied to purchase the article. Assessment device 100 displays on a display an amount of money thus calculated for the purchase. Furthermore, together with the amount of money for the purchase, assessment device 100 may display the information which indicates the state of the article, the information of the amount of money to be paid for the purchase at the rate applied to purchase the article, and other information on the display. Thus, a person who wishes that an object to be appraised is purchased can confirm an amount of money to be paid to purchase the article. Furthermore, irrespective of a judge's learned skill for appraisal, the judge can easily confirm an amount of money to be paid for a purchase, and his/her appraisal operation can thus be assisted.

Furthermore, for example, a constantly varying amount of money to be paid for a purchase may be displayed on a display of assessment devices 100 such as a smart phone so that an input operation of whether the purchase is finalized may be received from a person who wishes that an article is purchased etc. At the time, assessment device 100 may record in association with one another: a shop at which an appraisal is done; an object to be appraised; an amount of money to be paid for a purchase; and whether a person who wishes that the object is purchased has finalized the purchase. Thus assessment device 100 can accumulate data such as when, where and what article was appraised, whether an amount of money, as calculated, to be paid to purchase the article is sufficient for a person who wishes that the article is purchased to finalize the purchase, and the like. More specifically, a business operator who provides an appraisal service can understand not only an article which was actually purchased but also what an article is that a consumer wishes to have purchased for each geographical area.

Appraisal system 1 has thus been described. This appraisal system 1 can be used for example in airport facilities and other facilities which need to perform determination of authenticity of a large number of articles for inspection of counterfeit products. Furthermore, appraisal system 1 can be used for example in order for a brand holder holding a brand of an article to inspect whether a counterfeit product is distributed. Assessment device 100 comprises a CPU which executes an instruction of a program which is software which implements each function, a ROM (Read Only Memory) or memory device (collectively referred to as a "recording medium") on/in which the above program and a variety of data are recorded to be readable by a computer (or the CPU), a RAM (Random Access Memory) which develops the above program, etc. And when the computer (or CPU) reads the above program from the above recording medium and executes it, the object of the present invention is achieved. As the above recording medium, a "non-transitory tangible medium," e.g., a tape, a disk, a card, a semiconductor memory, a programmable logical circuit, etc. can be used. Furthermore, the above program may be supplied to the above computer via any transmission medium (such as a communication network, a broadcast wave, etc.) which can transmit that program. Note that the present invention can also be implemented in the form of a data signal embedded in a carrier wave, that allows the above program to be embodied by electronic transmission.

It should be understood that the embodiments disclosed herein have been described for the purpose of illustration only and in a non-restrictive manner in any respect. The scope of the present invention is defined by the terms of the claims, rather than the description above, and is intended to include any modifications within the meaning and scope equivalent to the terms of the claims.

### REFERENCE SIGNS LIST

1: appraisal system; 10: measurement device; 12: camera; 13: casing; 14: x ray irradiation device; 15,105: communication device; 16: detection device; 17: rotatably driven device; 18: control device; 50: article; 100: assessment device; 102: display; 104: console unit; 106: RAM.

## Claims

1. An appraisal system comprising:
an image pickup unit (12) configured to pick up an image of an article (50) to be appraised;
a storage unit (108) configured to store article information about a genuine product of the article (50) and, associated with said article information, component information of a metal part of a plurality of genuine products corresponding to a plurality of manufacturers, respectively;
an article information obtaining unit (100) configured to determine, based on a result of picking up an image by the image pickup unit (12), a manufacturer of the plurality of manufacturers that manufactures the article to be appraised, the article information obtaining unit (100) also being configured to obtain, from the storage unit (108), component information of a metal part of a genuine product corresponding to the determined manufacturer;
an analysis unit including:
an x-ray irradiation device (14) that radiates an x-ray to the article (50), and
a drive unit configured to positionally drive the x-ray irradiation device (14),
wherein the analysis unit is configured to analyze a component of a metal part configuring the article (50) by subjecting the article to be appraised to x ray irradiation and analysing the component of a metal part in the article to be appraised, wherein analysing a component of a metal part configuring the article (50) includes:
based on the result of picking up the image by the image pickup unit (12), the analysis unit determines a portion of the metal part configuring the article (50) to be irradiated with the x-ray, and
using the drive unit to positionally drive the x-ray irradiation device (14) so that the article (50) to be appraised is subjected to x-ray irradiation at the determined portion of the metal part configuring the article (50) to be irradiated with the x-ray; and
an authenticity determination unit configured to determine whether the article to be appraised is authentic based on the component information of the metal part included in the article information obtained by the article information obtaining unit and a result of an analysis done by the analysis unit corresponding to the component of the metal part in the article to be appraised.

2. The appraisal system according to claim 1, further comprising:
a display (102) configured to display a result of a determination made by the authenticity determination unit about the article to be appraised;
a console unit (104) configured to receive an operation adding the article information of the article for which the result of the determination is displayed on the display; and
an updating unit configured to be responsive to content of the operation received by the console unit (104) to add the article information to update the article information stored in the storage unit about the article displayed on the display.

3. The appraisal system according to claim 1 or 2, wherein:
the storage unit (108) is configured to store a result of an analysis of a component of a metal part of a genuine product of the article and a result of an analysis of a component of a metal part of a counterfeit product of the article in association with whether the article is the genuine product or the counterfeit product, based on the result of the analysis done by the analysis unit, as a history; and
the authenticity determination unit is configured to determine whether the article to be appraised is authentic based on a result of an analysis by the analysis unit of the article to be appraised and the history of the result of the analysis of the component of the metal part of the genuine product or the counterfeit product stored in the storage unit.

4. The appraisal system according to any one of claims 1 to 3, further comprising a state determination unit configured to determine a state of the article to be appraised, based on information of a contour of a genuine product obtained by the article information obtaining unit and a result of picking up an image by the image pickup unit.

5. An appraisal method comprising the steps of:
picking up an image of an article (50) to be appraised;
determining, based on a result of picking up an image by the image pick up unit (12), a manufacturer of the plurality of manufacturers that manufactures the article to be appraised, and obtaining component information of a metal part of a genuine product corresponding to the determined manufacturer;
analyzing a component of a metal part configuring the article by subjecting the article to be appraised to x ray irradiation and analysing the component of a metal part of the article to be appraised, wherein analysing a component of a metal part configuring the article (50) includes:
based on the result of picking up the image by the image pickup unit (12), the analysis unit determines a portion of the metal part configuring the article (50) to be irradiated with the x-ray, and
using the drive unit to positionally drive the x-ray irradiation device (14) so that the article (50) to be appraised is subjected to x-ray irradiation at the determined portion of the metal part configuring the article (50) to be irradiated with the x-ray; and
determining a state of the article to be appraised, based on the component information of the metal part included in the article information obtained and a result of an analysis corresponding to the component of the metal part in the article to be appraised.

## Patentansprüche

1. Beurteilungssystem, das Folgendes umfasst:
eine Bildaufnahmeeinheit (12), die ausgelegt ist, um ein Bild eines zu beurteilenden Artikels (50) aufzunehmen;
eine Speichereinheit (108), die ausgelegt ist, um Artikelinformationen über ein echtes Produkt des Artikels (50) und in Zuordnung zu den Artikelinformationen Komponenteninformationen eines Metallteils einer Vielzahl von echten Produkten zu speichern, die jeweils einer Vielzahl von Herstellern entsprechen;
eine Artikelinformationserhaltseinheit (100), die ausgelegt ist, um basierend auf einem Ergebnis der Aufnahme eines Bilds durch die Bildaufnahmeeinheit (12) einen Hersteller aus der Vielzahl von Herstellern zu bestimmen, der den zu beurteilenden Artikel herstellt, wobei die Artikelinformationserhaltseinheit (100) ebenfalls ausgelegt ist, um Komponenteninformationen eines Metallteils eines echten Produkts, das dem bestimmten Hersteller entspricht, von der Speichereinheit (108) zu erhalten;
eine Analyseeinheit, die Folgendes umfasst:
eine Röntgenbestrahlungsvorrichtung (14), die den Artikel (50) mit Röntgenstrahlen bestrahlt, und
eine Antriebseinheit, die ausgelegt ist, um die Röntgenbestrahlungsvorrichtung (14) anzutreiben, sodass diese positioniert wird,
wobei die Analyseeinheit ausgelegt ist, um eine Komponente eines Metallteils, die den Artikel (50) konfiguriert, durch Aussetzen des zu beurteilenden Artikels gegenüber Röntgenstrahlung und durch Analysieren der Komponente eines Metallteils in dem zu beurteilenden Artikel zu analysieren, wobei das Analysieren einer Komponente eines Metallteils, der den Artikel (50) konfiguriert, Folgendes umfasst:
basierend auf dem Ergebnis der Aufnahme des Bilds durch die Bildaufnahmeeinheit (12) das Bestimmen durch die Analyseeinheit eines Teils des Metallteils, der den Artikel (50), der mit der Röntgenstrahlung zu bestrahlen ist, konfiguriert, und
die Verwendung der Antriebseinheit, um die Röntgenbestrahlungsvorrichtung (14) so anzutreiben, dass diese positioniert wird, damit der zu beurteilende Artikel (50) an dem bestimmten Teil des Metallteils, der den mit den Röntgenstrahlen zu bestrahlenden Artikel (50) konfiguriert, Röntgenstrahlung ausgesetzt wird; und
eine Authentizitätsbestimmungseinheit, die ausgelegt ist, um basierend auf den Komponenteninformationen des Metallteils, die in den durch die Artikelinformationserhaltseinheit erhaltenen Artikelinformationen enthalten sind, und auf einem Ergebnis einer Analyse, die durch die Analyseeinheit durchgeführt wird, die der Komponente des Metallteils in dem zu beurteilenden Artikel entspricht, zu bestimmen, ob der zu beurteilende Artikel authentisch ist.

2. Beurteilungssystem nach Anspruch 1, das ferner Folgendes umfasst:
eine Anzeige (102), die ausgelegt ist, um ein Ergebnis einer Bestimmung anzuzeigen, die durch die Authentizitätsbestimmungseinheit über den zu beurteilenden Artikel vorgenommen wurde;
eine Konsoleneinheit (104), die ausgelegt ist, um einen Vorgang zu empfangen, der die Artikelinformationen des Artikels, für den das Ergebnis der Bestimmung auf der Anzeige angezeigt wird, hinzufügt; und
eine Aktualisierungseinheit, die ausgelegt ist, um auf Inhalte des Vorgangs, der von der Konsoleneinheit (104) zum Hinzufügen der Artikelinformationen empfangen wurde, zu antworten, um die in der Speichereinheit gespeicherten Artikelinformationen über den auf der Anzeige angezeigten Artikel zu aktualisieren.

3. Beurteilungssystem nach Anspruch 1 oder 2, wobei:
die Speichereinheit (108) ausgelegt ist, um ein Ergebnis einer Analyse einer Komponente eines Metallteils eines echten Produkts des Artikels und ein Ergebnis einer Analyse einer Komponente eines Metallteils eines gefälschten Produkts des Artikels basierend auf dem Ergebnis der Analyse, die durch die Analyseeinheit durchgeführt wird, in Zuordnung damit, ob der Artikel das echte Produkt oder das gefälschte Produkt ist, als Verlauf zu speichern; und
die Authentizitätsbestimmungseinheit ausgelegt ist, um basierend auf einem Ergebnis einer Analyse durch die Analyseeinheit des zu beurteilenden Artikels und des Verlaufs des Ergebnisses der Analyse der Komponente des Metallteils des echten Produkts oder des gefälschten Produkts, das in der Speichereinheit gespeichert ist, zu bestimmen, ob der zu beurteilende Artikel authentisch ist.

4. Beurteilungssystem nach einem der Ansprüche 1 bis 3, das ferner eine Zustandsbestimmungseinheit umfasst, die ausgelegt ist, um einen Zustand des zu beurteilenden Artikels basierend auf Informationen eines Umrisses eines echten Produkts, die durch die Artikelinformationserhaltseinheit erhalten wurden, und basierend auf dem Aufnehmen eines Bilds durch die Bildaufnahmeeinheit zu bestimmen.

5. Beurteilungsverfahren, das die folgenden Schritte umfasst:
Aufnehmen eines Bilds eines zu beurteilenden Artikels (50);
Bestimmen, basierend auf einem Ergebnis des Aufnehmens eines Bilds durch die Bildaufnahmeeinheit (12), eines Herstellers aus der Vielzahl von Herstellern, der den zu beurteilenden Artikel herstellt, und Erhalten von Komponenteninformationen eines Metallteils eines echten Produkts, das dem bestimmten Hersteller entspricht;
Analysieren einer Komponente eines Metallteils, der den Artikel konfiguriert, durch Aussetzen des zu beurteilenden Artikels gegenüber einer Röntgenbestrahlung und Analysieren der Komponente eines Metallteils des zu beurteilenden Artikels, wobei das Analysieren einer Komponente eines Metallteils, der den Artikel (50) konfiguriert, Folgendes umfasst:
basierend auf dem Ergebnis der Aufnahme des Bilds durch die Bildaufnahmeeinheit (12) das Bestimmen eines Teils des Metallteils, der den mit Röntgenstrahlung zu bestrahlenden Artikel (50) konfiguriert, durch die Analyseeinheit und
die Verwendung der Antriebseinheit, um die Röntgenbestrahlungsvorrichtung (14) so anzutreiben, damit diese positioniert wird, damit der zu beurteilende Artikel (50) mit der Röntgenstrahlung bestrahlt wird; und
das Bestimmen eines Zustands des zu beurteilenden Artikels basierend auf den Komponenteninformationen des Metallteils, die in den erhaltenen Artikelinformationen enthalten sind, und basierend auf einem Ergebnis einer Analyse, die der Komponente des Metallteils in dem zu beurteilenden Artikel entspricht.

## Revendications

1. Système d'évaluation comprenant :
une unité de prise d'image(12) permettant de prendre une image d'un article (50) devant être évalué ;
une unité de stockage (108) configurée pour stocker des informations d'article concernant un produit authentique de l'article (50) et, associées auxdites informations d'article, des informations de composant d'une pièce métallique d'une pluralité d'articles authentiques correspondant respectivement à une pluralité de fabricants ;
une unité d'acquisition d'informations d'article (100) configurée pour déterminer, sur la base d'un résultat de prise d'une image de l'unité de prise d'image (12), un fabricant de la pluralité de fabricants qui fabrique l'article devant être évalué, l'unité d'acquisition d'informations d'article (100) étant également configurée pour obtenir, à partir de l'unité de stockage (108), des informations de composant d'une pièce métallique d'un produit authentique correspondant au fabricant déterminé ;
une unité d'analyse comprenant :
un dispositif d'irradiation par rayons x (14) qui rayonne un rayon x vers l'article (50), et
une unité d'entraînement configurée pour entraîner en position le dispositif d'irradiation par rayons x (14),
dans lequel l'unité d'analyse est configurée pour analyser un élément d'une pièce métallique configurant l'article (50) en soumettant l'article devant être évalué à une irradiation par rayons x et en analysant le composant d'une pièce métallique dans l'article devant être évalué, dans lequel l'analyse d'un composant d'une pièce métallique configurant l'article (50) comprend les étapes consistant à :
sur la base du résultat de la capture de l'image de l'unité de prise d'image (12), l'unité d'analyse qui détermine une partie de la pièce métallique configurant l'article (50) à irradier par les rayons x, et
utiliser l'unité d'entraînement pour entraîner en position le dispositif d'irradiation par rayons x (14) de telle sorte que l'article (50) devant être évalué soit soumis à une irradiation par rayons x au niveau de la partie déterminée de la pièce métallique configurant l'article (50) à irradier par rayons x ; et
une unité de détermination d'authenticité configurée pour déterminer si l'article devant être évalué est authentique sur la base des informations de composant de la pièce métallique incluses dans les informations d'article acquises par l'unité l'obtention d'informations d'article et d'un résultat d'une analyse effectuée par l'unité d'analyse correspondant au composant de la pièce métallique dans l'article devant être évalué.

2. Système d'évaluation selon la revendication 1, comprenant en outre :
un affichage (102) configuré pour afficher un résultat d'une détermination réalisée par l'unité de détermination d'authenticité concernant l'article devant être évalué ;
une unité de console (104) configurée pour recevoir une opération ajoutant les informations d'article de l'article pour lequel le résultat de la détermination est affiché sur l'affichage ; et
une unité de mise à jour configurée pour répondre au contenu de l'opération reçue par l'unité de console (104) pour ajouter les informations d'article afin de mettre à jour les informations d'article stockées dans l'unité de stockage concernant l'article affiché sur l'affichage.

3. Système d'évaluation selon la revendication 1 ou 2, dans lequel :
l'unité de stockage (108) est configurée pour stocker un résultat d'une analyse d'un composant d'une pièce métallique d'un produit authentique de l'article et un résultat d'analyse d'un composant d'une pièce métallique d'un produit contrefait de l'article en association avec le fait que l'article soit le produit authentique ou le produit contrefait, sur la base du résultat de l'analyse effectuée par l'unité d'analyse, comme historique ; et
l'unité de détermination d'authenticité est configurée pour déterminer si l'article devant être évalué est authentique sur la base d'un résultat d'une analyse par l'unité d'analyse de l'article devant être évalué et de l'historique du résultat de l'analyse du composant de la pièce métallique du produit authentique ou du produit contrefait stocké dans l'unité de stockage.

4. Système d'évaluation selon l'une quelconque des revendications 1 à 3, comprenant en outre une unité de détermination d'état configurée pour déterminer un état de l'article devant être évalué, sur la base d'informations d'un contour d'un produit authentique obtenues par l'unité d'acquisition d'informations d'article et d'un résultat de prise d'une image par l'unité de prise d'image.

5. Procédé d'évaluation comprenant les étapes consistant à :
prendre une image d'un article (50) devant être évalué ;
déterminer, sur la base d'un résultat de prise d'une image par l'unité de prise d'image (12), un fabricant de la pluralité de fabricants qui fabrique l'article devant être évalué, et obtenir des informations de composant d'une pièce métallique d'un produit authentique correspondant au fabricant déterminé ;
analyser un composant d'une pièce métallique configurant l'article en soumettant l'article devant être évalué à une irradiation par rayons x et analyser le composant d'une pièce métalliques de l'article devant être évalué, dans lequel l'analyse d'un composant d'une pièce métallique configurant l'article (50) comprend les étapes consistant à :
sur la base du résultat d'une prise d'image par l'unité de prise d'image (12), l'unité d'analyse qui détermine une partie de la pièce métallique configurant l'article (50) à irradier par les rayons x, et
utiliser l'unité d'entraînement pour entraîner en position le dispositif d'irradiation par rayons x (14) de sorte que l'article (50) devant être évalué soit soumis à une irradiation par rayons x au niveau de la partie déterminée de la pièce métallique configurant l'article (50) à irradier par rayons x ; et
déterminer un état de l'article devant être évalué, sur la base des informations de composant de la pièce métallique incluses dans les informations d'article obtenues et d'un résultat d'une analyse correspondant au composant de la pièce métallique dans l'article devant être évalué.
